# FASCICULE DE BREVET EUROPEEN

(11) **EP 1 444 094 B1**
(45) Date de publication et mention de la délivrance du brevet: **25.01.2006**
(21) Numéro de dépôt: 02785503.0
(22) Date de dépôt: 16.09.2002
(51) Int. Cl.: B32B 7/06, B32B 5/28, B29C 70/22, F16F 1/366

(54) **PRODUIT LAMINE D'EPAISSEUR AJUSTABLE PAR PELAGE, PROCEDE DE PRODUCTION DE CE PRODUIT ET APPLICATION A LA CONSTITUTION DE CALES DE REGLAGES POUR ENSEMBLES MECANIQUES**
SCHICHTSTOFF MIT EINSTELLBARER DICKE DURCH ABSCHÄLEN, VERFAHREN ZUR HERSTELLUNG UND ANWENDUNG ZUR BILDUNG VON AUSGLEICHSSCHEIBEN
ROLLED PRODUCT HAVING A THICKNESS THAT CAN BE ADJUSTED BY MEANS OF PEELING, THE PRODUCTION METHOD THEREOF AND THE APPLICATION OF SAME IN THE PRODUCTION OF SHIMS FOR MECHANICAL ASSEMBLIES

(30) Priorité: 19.10.2001 FR 0113515
(43) Date de publication de la demande: 11.08.2004
(73) Titulaire: Gastel, Daniel André, 78370 Plaisir les Gatines (FR)
(72) Inventeur: Gastel, Daniel André, 78370 Plaisir les Gatines (FR)
(74) Mandataire: Thinat, Michel
(86) Numéro de dépôt international: PCT/FR2002/003154
(87) Numéro de publication internationale: WO 2003/039854

(56) Documents cités:
- EP-A- 0 667 233
- US-A- 4 263 243
- US-A- 4 412 854
- US-A- 5 514 448
- PATENT ABSTRACTS OF JAPAN vol. 1995, no. 09, 31 octobre 1995 (1995-10-31) & JP 07 156172 A (NICHIAS CORP), 20 juin 1995 (1995-06-20)

## Description

La présente invention concerne de manière générale les produits laminés présentant une épaisseur réglable par délitage, les procédés de fabrication de tels produits, et leur application comme cales de réglage pour des ensembles mécaniques.

Plus précisément, l'invention concerne dans un premier aspect un produit laminé présentant une épaisseur réglable par délitage, ce produit comprenant un empilement alterné de feuilles et de couches d'un matériau adhésif, chaque feuille présentant une résistance intrinsèque au déchirement, et chaque couche de matériau adhésif reliant l'une à l'autre deux feuilles adjacentes de l'empilement par une force de liaison plus faible que la résistance des feuilles au déchirement, ce dont il résulte que chaque feuille peut être détachée de l'empilement sans se déchirer.

Ces matériaux, dits pelables, sont largement utilisés comme cales d'épaisseur dans des ensembles mécaniques complexes, en particulier dans l'aéronautique. Ces ensembles peuvent comporter plusieurs centaines, voire plusieurs milliers de pièces, présentant chacune des tolérances dimensionnelles. La somme des tolérances crée des jeux qui peuvent dans certains cas être considérables, plusieurs millimètres, qu'il est nécessaire de compenser afin de permettre aux ensembles mécaniques d'assurer correctement leurs fonctions.

On utilise à cet effet des cales de réglage, le plus souvent pelables, en matériaux métalliques ou en polymères. Ces cales pelables sont composées de lamelles fines superposées et collées entre elles de manière à constituer des épaisseurs plus ou moins importantes, et usinées pour s'adapter au contour extérieur des organes à ajuster. Le réglage se fait par la réduction de l'épaisseur de la cale en pelant une ou plusieurs de ces lamelles et en insérant la cale à l'endroit où le jeu a été constaté.

EP-A-667233 décrit une cale de réglage pelable, comprenant une série de feuilles entre lesquelles sont intercalées des couches d'adhésif. Les dites feuilles sont métalliques ou éventuellement en matière plastique.

US-A-4526641 décrit une cale constituée par un empilement de feuilles thermodurcissables liées entre elles par un adhésif de même nature, et caractérisée par une certaine force de cohésion intralaminaire.

Les technologies mécaniques de pointe, notamment pour les avions ou les hélicoptères, intègrent progressivement des matériaux comprenant des tissus de fibres de verre, de carbone, de céramique ou d'aramide pour réaliser des composants mécaniques importants des appareils. Pour certains hélicoptères, 40% de la masse de l'appareil est ainsi constituée de tels matériaux.

Or, il n'existe pas actuellement de cales pelables constituées de matériaux de ce type. Les polymères pelables actuels sont des films lisses, et même s'ils peuvent inclure une petite charge minérale, de préférence constituée de fibres de verre, ils appartiennent à la famille des plastiques par leurs caractéristiques mécaniques et thermiques limitées et très inférieures à ce qu'on peut atteindre avec des tissus de fibres comme ceux cités ci-dessus.

En conséquence, les constructeurs doivent prévoir des ajustages par usinage, directement sur les pièces mécaniques, ce qui est très coûteux à la fabrication et plus encore à l'entretien, ou utiliser des matériaux pelables métalliques ou polymères dans les cas où les contraintes mécaniques ne sont pas trop élevées. Cependant, dans ce dernier cas, on risque une usure prématurée des pièces par abrasion en accouplant des matériaux de natures différentes.

Dans ce contexte, un premier but de l'invention est de proposer un produit laminé qui pallie les difficultés décrites ci-dessus.

A cette fin, le produit selon l'invention, par ailleurs conforme à la définition générique qu'en donne le préambule ci-dessus, est essentiellement caractérisé en ce que chaque feuille est essentiellement formée de fibres tissées, et en ce que chaque feuille de chaque paire de feuilles adjacentes à une même couche commune de matériau adhésif est imprégnée en épaisseur d'une masse de matériau adhésif qui fait corps avec la couche commune de matériau adhésif.

Dans un mode de réalisation du produit selon l'invention, le matériau adhésif est une résine, par exemple de type époxy, phénolique, vinyl-ester ou polyvinylique, solidarisant les feuilles par une opération de polymérisation.

Selon un aspect avantageux du produit selon l'invention, le matériau adhésif peut représenter 40% à 60% du volume du produit avant l'opération de polymérisation.

Selon un aspect avantageux du produit selon l'invention, des adjuvants peuvent être ajoutés à la résine pour former le matériau adhésif, ces adjuvants étant des durcisseurs et/ou des diluants destinés à modifier la viscosité du matériau adhésif.

Selon un aspect avantageux du produit selon l'invention, l'adhérence des feuilles adjacentes les unes aux autres peut être diminuée en augmentant la quantité de diluant en proportion de la quantité de résine dans le matériau adhésif.

Selon un aspect avantageux du produit selon l'invention, l'adjuvant peut représenter plus de 50% en volume du matériau adhésif avant l'opération de polymérisation.

Selon un aspect avantageux du produit selon l'invention, les fibres des feuilles peuvent être essentiellement des fibres de verre, de carbone, de céramique ou d'aramide, ou un mélange de celles-ci.

Selon un deuxième aspect, l'invention concerne un procédé de fabrication d'un produit laminé présentant une épaisseur réglable par délitage, ce procédé comprenant une opération d'empilement consistant à former un empilement alterné de feuilles et de couches d'un matériau adhésif.

Le procédé selon l'invention, par ailleurs conforme à la définition générique qu'en donne le préambule ci-dessus, est essentiellement caractérisé en ce qu'il comprend, préalablement à l'opération d'empilement, les opérations consistant à choisir, en tant que feuille, un tissu de fibres tissées, et à imprégner en épaisseur chaque feuille d'un matériau adhésif, chaque couche de matériau adhésif disposée entre deux feuilles adjacentes étant formée par jonction du matériau adhésif imprégnant l'une des feuilles adjacentes par le matériau adhésif imprégnant l'autre feuille adjacente.

Dans un mode de réalisation possible du procédé selon l'invention, le matériau adhésif est une résine, par exemple de type époxy, phénolique, vinyl-ester ou polyvinylique.

Selon un aspect avantageux du procédé selon l'invention, le matériau adhésif peut représenter 40% à 60% du volume de la feuille après imprégnation.

Selon un aspect avantageux du procédé selon l'invention, des adjuvants peuvent être ajoutés à la résine pour former le matériau adhésif, ces adjuvants étant des durcisseurs et/ou des diluants destinés à modifier la viscosité du matériau adhésif.

Selon un aspect avantageux du procédé selon l'invention, les fibres des feuilles peuvent être essentiellement des fibres de verre, de carbone, de céramique ou d'aramide, ou un mélange de celles-ci.

Selon un aspect avantageux du procédé selon l'invention, ce procédé peut comprendre une étape de polymérisation des feuilles imprégnées consistant à disposer les feuilles entre deux supports plans parallèles, ces supports étant pressés l'un contre l'autre à température ambiante ou à chaud pendant une durée prédéterminée.

Selon un aspect avantageux du procédé selon l'invention, le matériau adhésif peut comprendre plus de 50% d'adjuvant.

Selon un aspect avantageux du procédé selon l'invention, ce procédé peut comprendre une étape de pré-polymérisation consistant à maintenir à température ambiante les feuilles imprégnées pendant une durée prédéterminée.

Selon un aspect avantageux du procédé selon l'invention, l'adhérence des feuilles du produit laminé adjacentes les unes aux autres peut être diminuée en augmentant la quantité de diluant en proportion de la quantité de résine dans le matériau adhésif et/ou en augmentant la durée de l'étape de pré-polymérisation.

Selon un aspect avantageux du procédé selon l'invention, l'opération d'imprégnation des tissus de fibre peut être effectuée par pulvérisation, par application manuelle à l'aide d'un rouleau, par impression sur une machine de type «offset » ou par trempage.

Selon un troisième aspect, l'invention concerne les cales de réglages pelables pour les ensembles mécaniques.

Les cales de réglages pelables selon l'invention sont constituées essentiellement d'un produit laminé selon l'invention ou obtenu avec le procédé de fabrication selon l'invention.

D'autres caractéristiques et avantages de l'invention ressortiront clairement de la description qui en est faite ci-après, à titre indicatif et nullement limitatif, en référence aux dessins annexés, dans lesquels:
- la Figure 1 est une vue en perspective d'un produit laminé selon l'invention,
- la Figure 2 est une vue en coupe dans le plan II-II de la Figure 1,
- la Figure 3 est une vue en perspective d'un tissu imprégné du produit laminé de la Figure 1, et
- la Figure 4 est une vue en perspective du tissu de la Figure 3 avant imprégnation.

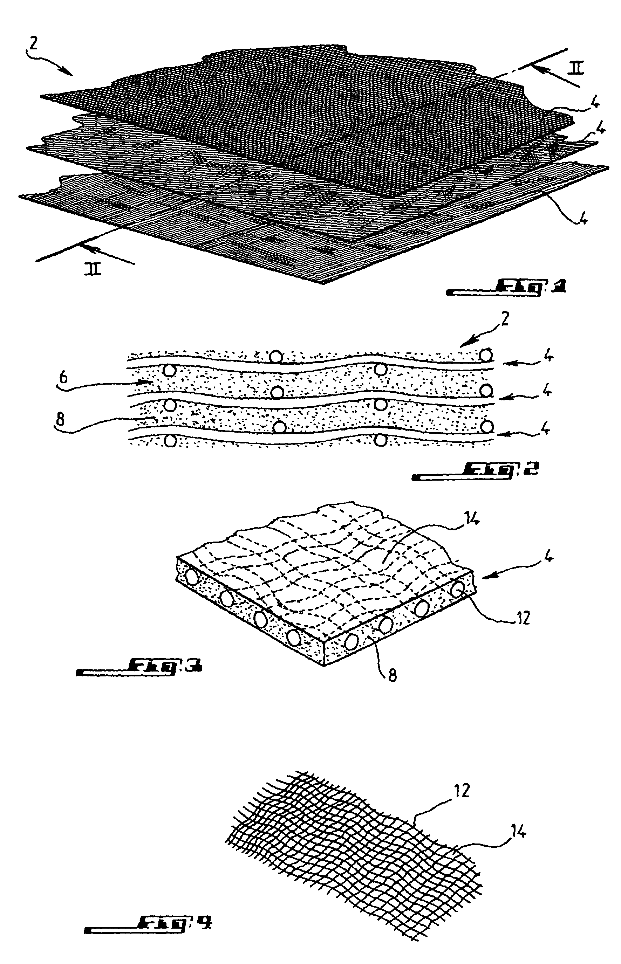

Comme le montrent les figures 1 et 2, l'invention concerne un produit laminé comprenant un empilement 2 de feuilles 4 séparées par des couches 6 d'un matériau adhésif 8. Chaque feuille 4 présente une résistance intrinsèque au déchirement, dépendante de la nature et de la forme de la matière ou des matières qui la constitue.

Le matériau adhésif 8 et l'épaisseur de chaque couche 6 reliant l'une à l'autre deux feuilles 4 adjacentes de l'empilement 2 sont choisis de telle sorte que la force de liaison liant les deux feuilles est plus faible que la résistance de ces feuilles au déchirement, ce dont il résulte que chaque feuille peut être détachée de l'empilement sans se déchirer.

Selon l'invention, chaque feuille 4 comprend un tissu de fibres 12 tissées délimitant entre elles des interstices 14. Les tissus 12 de chaque feuille 4 de chaque paire de feuilles adjacentes à une même couche 6 de matériau adhésif 8 sont imprégnées en épaisseur d'une masse de matériau adhésif qui fait corps avec la couche commune de matériau adhésif au moins à travers les interstices 14 de cette feuille.

Ces tissus 12 sont formés de fibres entrecroisées, comme le montre les figures 3 et 4. Les fibres peuvent être des fibres de verre, de carbone, de céramique ou d'aramide, ou de tout autre matériau présentant des propriétés mécaniques comparables. Plusieurs types de fibres peuvent être mélangés dans un même tissu. Ces tissus sont bien connus de l'homme du métier et ne seront pas décrits plus en détail.

Le matériau adhésif 8 est un matériau polymérisable, soit par traitement thermique, soit à température ambiante. Ce matériau adhésif est par exemple une résine époxy, phénolique, vinyl-ester ou polyvinylique. Il est de préférence mono-constituant.

Des adjuvants sont ajoutés dans certains cas, détaillés plus loin, à la résine. Ces adjuvants sont de deux types. Des durcisseurs sont ajoutés pour conférer au produit laminé des caractéristiques mécaniques déterminées, par exemple de dureté, de rigidité, ou de résistance en traction et en compression.

Le deuxième type d'adjuvant est un diluant destiné à modifier la viscosité du matériau adhésif 8. La quantité de diluant va influencer la qualité de l'imprégnation du tissu fibreux 12, et également l'adhérence des feuilles 4 adjacentes l'une par rapport à l'autre.

On va maintenant décrire le procédé de préparation du produit laminé.

Des pièces du tissu fibreux 12 mentionné ci-dessus sont d'abord découpées et mises aux dimensions souhaitées. Chacune d'entre elle constituera une feuille du produit laminé après traitement.

La pièce de tissu subit ensuite une opération d'imprégnation par le matériau adhésif 8. Un des aspects importants de l'invention est d'obtenir une bonne imprégnation du tissu fibreux par le matériau adhésif, c'est à dire une imprégnation aussi complète que possible, par laquelle toutes les fibres du tissu sont complètement entourées par une gangue de matériau adhésif et tous les interstices 14 du tissu 12 sont comblés, comme on le voit sur la figure 3.

Pour atteindre ce résultat, on utilise une quantité de résine comprise entre 40% et 60% du volume du tissu 12 après imprégnation.

Cette quantité de matériau adhésif 8 est considérablement plus élevée que la quantité mise en oeuvre dans des produits laminés de l'art antérieur. Dans l'art antérieur, le matériau adhésif ne sert qu'à constituer la couche adhésive séparant deux feuilles 4 adjacentes, d'une épaisseur de deux microns environ, alors que, selon l'invention, il sert également à constituer la feuille elle-même.

Un autre paramètre important pour la réussite de l'opération d'imprégnation est la viscosité du matériau adhésif 8. Celle-ci dépend bien entendu du choix de la résine polymérisable utilisée, qui est fonction de l'application visée pour le produit laminé à fabriquer. La viscosité naturelle de la résine peut être corrigée en ajoutant le diluant mentionné ci-dessus. Ce diluant est aqueux ou en solution dans un autre solvant en fonction de la résine choisie.

Le choix du diluant et la quantité à ajouter ne pose pas de problème à l'homme du métier.

L'opération d'imprégnation est faite par pulvérisation au moyen d'une buse ou d'un pistolet, par application au rouleau manuel, par impression sur machine de type « offset », par trempage du tissu 12 dans un bain de matériau adhésif ou par tout autre technique permettant une bonne pénétration du matériau adhésif 8 dans le tissu fibreux 12.

Les feuilles 4 de tissu imprégné sont ensuite, si nécessaire, conservées en attente d'utilisation dans une chambre froide à une température inférieure à moins 18°C. Cette caractéristique de l'invention est particulièrement avantageuse car elle permet de fabriquer les feuilles en grandes séries. La conservation à la température mentionnée ci-dessus permet de bloquer le phénomène de polymérisation du matériau adhésif 8. La durée de stockage peut atteindre plusieurs mois sans que cela entraîne une dégradation des performances du produit laminé obtenu à partir des feuilles 4 stockées.

Les feuilles 4 de tissu imprégné subissent ensuite une opération de pré-polymérisation. Cette opération consiste à maintenir à température ambiante les feuilles 4 de tissu imprégné pendant une durée prédéterminée.

L'adhérence des feuilles de la pile adjacentes les unes aux autres, c'est-à-dire la facilité avec laquelle elles peuvent être pelées, dépend à la fois de la durée de l'opération de pré-polymérisation et de la quantité de diluant ajouté dans le matériau adhésif 8 en proportion de la résine.

En l'absence de diluant, le produit laminé obtenu à partir des feuilles 4 de tissu imprégné pré-polymérisées pendant six mois est d'une pelabilité aisée. Le produit laminé obtenu à partir des feuilles 4 de tissu imprégné pré-polymérisées pendant deux mois est d'une pelabilité moyenne. Le produit laminé obtenu à partir des feuilles 4 de tissu imprégné qui n'ont pas été pré-polymérisées est d'une pelabilité difficile.

L'augmentation de la quantité de diluant joue dans le sens d'une plus grande facilité de pelage des feuilles 4. L'introduction d'une certaine quantité de diluant dans le matériau adhésif 8 va donc permettre d'obtenir des pelabilités équivalentes, avec des durées de polymérisation plus courtes que celles qui sont indiquées ci-dessus.

On considère que si le matériau adhésif 8 contient plus de 50% de diluant en volume avant imprégnation, le phase de pré-polymérisation n'est plus nécessaire pour obtenir des produits laminés de pelabilité moyenne.

Les feuilles 4 de tissu imprégné subissent enfin une opération de polymérisation finale sous pression. Cette opération consiste à disposer les feuilles 4 en pile entre deux supports plans parallèles, ces supports étant pressés l'un contre l'autre à température ambiante ou à chaud pendant une durée prédéterminée. Des liaisons chimiques se créent à l'interface entre les masses de matériau adhésif 8 imprégnant les tissus 12 des feuilles 4 adjacentes, créant ainsi la couche 6 intermédiaire de liaison entre les feuilles 4.

Cette opération confère au produit laminé les qualités mécaniques recherchées de parallélisme, de planéité, de cohésion et de pelabilité.

Les supports plans sont constitués de deux plateaux d'acier calibrés de forte épaisseur, par exemple 50 mm. Les plateaux sont traversés en périphérie par des tiges filetés ou des vis, sur lesquels un serrage proportionnel est appliqué à l'aide d'un outil dynamométrique. Cette opération est effectuée à température ambiante ou dans une étuve à température contrôlée.

Dans un autre mode de réalisation, les feuilles sont empilées et pressées dans une presse chauffante.

La durée de l'opération de polymérisation est fonction de la nature de la résine utilisé dans le matériau adhésif 8, de la température et de la quantité de diluant ajoutée. A température ambiante, cette durée va de quelques jours si le matériau adhésif 8 contient plus de 50% de diluant en volume à plusieurs semaines si le matériau adhésif 8 ne contient pas de diluant. Avec chauffage, cette durée est réduite à quelques heures, généralement de une à trois heures.

Enfin, le produit laminé est usiné ou découpé si nécessaire aux dimensions adéquates.

La pièce après cette dernière étape constitue le produit laminé prêt à l'emploi.

Les produits laminés de ce type sont bien adaptés pour servir de cales pour l'industrie aéronautique, par exemple pour des avions ou des hélicoptères, ceux-ci contenant un nombre de plus en plus grand de pièces en matériaux comprenant des tissus de fibres.

Il est bien évident que ces produits laminés peuvent également servir de cales pelables dans d'autres domaines, généralement partout où des caractéristiques de légèreté et de résistance mécaniques sont recherchées.

Il est à noter que les produits laminés décrits ci-dessus sont particulièrement faciles à peler, ce pelage pouvant être fait à la main, sans l'aide d'un outil, à la différence des cales métalliques.

## Revendications

1. Produit laminé présentant une épaisseur réglable par délitage, ce produit comprenant un empilement (2) alterné de feuilles (4) et de couches (6) d'un matériau adhésif (8), chaque feuille 4 présentant une résistance intrinsèque au déchirement, et chaque couche (6) de matériau adhésif (8) reliant l'une à l'autre deux feuilles (4) adjacentes de l'empilement (2) par une force de liaison plus faible que la résistance des feuilles (4) au déchirement, ce dont il résulte que chaque feuille (4) peut être détachée de l'empilement (2) sans se déchirer, **caractérisé en ce que** chaque feuille (4) est formée de fibres tissées et **en ce que** chaque feuille (4) de chaque paire de feuilles (4) adjacentes à une même couche (6) commune de matériau adhésif (8) est imprégnée en épaisseur d'une masse de matériau adhésif (8) qui fait corps avec la couche (6) commune de matériau adhésif (8).

2. Produit laminé suivant la revendication 1, **caractérisé en ce que** le matériau adhésif (8) est une résine, par exemple de type époxy, phénolique, vinyl-ester ou polyvinylique, solidarisant les feuilles (4) par une opération de polymérisation.

3. Produit laminé suivant la revendication 2, **caractérisé en ce que** le matériau adhésif (8) représente 40% à 60% du volume du produit avant l'opération de polymérisation.

4. Produit laminé suivant l'une quelconque des revendications 2 à 3, **caractérisé en ce que** des adjuvants sont ajoutés à la résine pour former le matériau adhésif (8), ces adjuvants étant des durcisseurs et/ou des diluants destinés à modifier la viscosité du matériau adhésif.

5. Produit laminé suivant la revendication 4, **caractérisé en ce que** l'adhérence des feuilles (4) adjacentes les unes aux autres est diminuée en augmentant la quantité de diluant en proportion de la quantité de résine dans le matériau adhésif (8).

6. Produit laminé suivant la revendication 4 ou 5, **caractérisé en ce que** l'adjuvant représente plus de 50% en volume du matériau adhésif (8) avant l'opération de polymérisation.

7. Produit laminé suivant l'une quelconque des revendications 1 à 6, **caractérisé en ce que** les fibres des feuilles (4) sont des fibres de verre, de carbone, de céramique ou d'aramide, ou un mélange de celles-ci.

8. Procédé de fabrication d'un produit laminé présentant une épaisseur réglable par délitage, ce procédé comprenant une opération d'empilement consistant à former un empilement alterné de feuilles (4) et de couches (6) d'un matériau adhésif (8), **caractérisé en ce qu'**il comprend, préalablement à l'opération d'empilement, les opérations consistant à choisir, en tant que feuille (4), un tissu (12) de fibres tissées, et à imprégner en épaisseur chaque feuille (4) d'un matériau adhésif (8), chaque couche (6) de matériau adhésif (8) disposée entre deux feuilles (4) adjacentes étant formée par jonction du matériau adhésif (8) imprégnant l'une des feuilles (4) adjacentes par le matériau adhésif (8) imprégnant l'autre feuille adjacente (4).

9. Procédé suivant la revendication 8, **caractérisé en ce que** le matériau adhésif (8) est une résine par exemple de type époxy, phénolique, vinyl-ester ou polyvinylique.

10. Procédé suivant la revendication 8 ou 9, **caractérisé en ce que** le matériau adhésif (8) représente 40% à 60% du volume de la feuille (4) après imprégnation.

11. Procédé suivant la revendication 9 ou 10, **caractérisé en ce que** des adjuvants sont ajoutés à la résine pour former le matériau adhésif (8), ces adjuvants étant des durcisseurs et/ou des diluants destinés à modifier la viscosité du matériau adhésif (8).

12. Procédé suivant l'une quelconque des revendications 8 à 11, **caractérisé en ce que** les fibres des feuilles (4) sont des fibres de verre, de carbone, de céramique ou d'aramide, ou un mélange de celles-ci.

13. Procédé suivant l'une quelconque des revendications 8 à 12, **caractérisé en ce que** ce procédé comprend une étape de polymérisation des feuilles (4) imprégnées consistant à disposer les feuilles (4) entre deux supports plans parallèles, ces supports étant pressés l'un contre l'autre à température ambiante ou à chaud pendant une durée prédéterminée.

14. Procédé suivant l'une quelconque des revendications 8 à 13 en combinaison avec la revendication 11, **caractérisé en ce que** le matériau adhésif (8) comprend plus de 50% d'adjuvant.

15. Procédé suivant l'une quelconque des revendications 8 à 13, **caractérisé en ce que** ce procédé comprend une étape de pré-polymérisation consistant à maintenir à température ambiante les feuilles (4) imprégnées pendant une durée prédéterminée.

16. Procédé suivant la revendication 15 en combinaison avec la revendication 11, **caractérisé en ce que** l'adhérence des feuilles (4) du produit laminé adjacentes les unes aux autres est diminuée en augmentant la quantité de diluant en proportion de la quantité de résine dans le matériau adhésif (8) et/ou en augmentant la durée de l'étape de pré-polymérisation.

17. Procédé suivant l'une quelconque des revendications 8 à 16, **caractérisé en ce que** l'opération d'imprégnation des tissus (12) de fibres est effectuée par pulvérisation, par application manuelle à l'aide d'un rouleau, par impression sur une machine de type « offset » ou par trempage.

18. Application d'un produit suivant l'une quelconque des revendications 1 à 7, ou d'un produit obtenu par le procédé suivant l'une quelconque des revendications 8 à 17, à la constitution d'une cale de réglage pelable pour des ensembles mécaniques.

## Patentansprüche

1. Walzerzeugnis mit einer durch Schichtspaltung anpassbaren Dicke, wobei das Erzeugnis eine abwechselnde Schichtung (2) von Flachmaterialbogen (4) und von Schichten (6) eines Klebstoffs (8) umfasst, wobei jeder Flachmaterialbogen (4) einen inneren Widerstand gegen das Zerreißen aufweist und jede Schicht (6) von Klebstoff (8) je zwei aneinander angrenzende Flachmaterialbogen (4) der Schichtung (2) mit einer Bindungskraft verbindet, die geringer ist als der Widerstand der Flachmaterialbogen (4) gegen das Zerreißen, was dazu führt, dass jeder Flachmaterialbogen (4) von der Schichtung (2) gelöst werden kann, ohne dass er zerreißt,
**dadurch gekennzeichnet,**
**dass** jeder Flachmaterialbogen (4) aus Webfasern gebildet wird und **dadurch**, dass jeder Flachmaterialbogen (4) jedes Paars von an eine selbe, gemeinsame Schicht (6) von Klebstoff (8) angrenzenden Flachmaterialbogen (4) auf seiner gesamten Dicke mit einer Masse von Klebstoff (8) getränkt ist, die mit der gemeinsamen Schicht (6) von Klebstoff (8) eine Einheit bildet.

2. Walzerzeugnis nach Anspruch 1, **dadurch gekennzeichnet, dass** es sich bei dem Klebstoff (8) um ein Harz handelt, beispielsweise um ein Epoxid-, Phenol-, Vinylester- oder Polyvinylharz, das die Flachmaterialbogen (4) durch einen Polymerisationsvorgang zusammenhält.

3. Walzerzeugnis nach Anspruch 2, **dadurch gekennzeichnet, dass** der Klebstoff (8) 40% bis 60% des Volumens des Erzeugnisses vor dem Polymerisationsvorgang ausmacht.

4. Walzerzeugnis nach einem der Ansprüche 2 oder 3, **dadurch gekennzeichnet, dass** das Harz mit Zusätzen versehen wird, um den Klebstoff (8) zu bilden, wobei es sich bei diesen Zusätzen um Härte- und/oder Verdünnungsmittel zur Änderung der Viskosität des Klebstoffs handelt.

5. Walzerzeugnis nach Anspruch 4, **dadurch gekennzeichnet, dass** die Haftung aneinander angrenzender Flachmaterialbogen (4) durch Erhöhung der Menge des Verdünnungsmittels im Verhältnis zur Menge des Harzes im Klebstoff (8) verringert wird.

6. Walzerzeugnis nach einem der Ansprüche 4 oder 5, **dadurch gekennzeichnet, dass** der Zusatz mehr als 50% des Volumens des Klebstoffs (8) vor dem Polymerisationsvorgang ausmacht.

7. Walzerzeugnis nach einem der Ansprüche 1 bis 6, **dadurch gekennzeichnet, dass** es sich bei den Fasern der Flachmaterialbogen (4) um Glas-, Kohlenstoff-, Keramik- oder Aramidfasern oder um eine Mischung daraus handelt.

8. Verfahren zur Herstellung eines Walzerzeugnisses mit einer durch Schichtspaltung anpassbaren Dicke, wobei dieses Verfahren einen Schichtungsvorgang umfasst, der darin besteht, eine abwechselnde Schichtung von Flachmaterialbogen (4) und von Schichten (6) eines Klebstoffs (8) zu bilden,
**dadurch gekennzeichnet, dass**
es vor dem Schichtungsvorgang die Arbeitsgänge umfasst, die darin bestehen, ein Gewebe (12) aus Webfasern als Flachmaterialbogen (4) auszuwählen und jeden Flachmaterialbogen (4) auf seiner gesamten Dicke mit einem Klebstoff (8) zu tränken, wobei jede zwischen zwei aneinander angrenzenden Flachmaterialbogen (4) angeordnete Schicht (6) von Klebstoff (8) durch Verbindung des Klebstoffs (8), der einen der angrenzenden Flachmaterialbogen (4) tränkt, mit dem Klebstoff (8), der den anderen angrenzenden Flachmaterialbogen (4) tränkt, gebildet wird.

9. Verfahren nach Anspruch 8, **dadurch gekennzeichnet, dass** es sich bei dem Klebstoff (8) um ein Harz handelt, beispielsweise um ein Epoxid-, Phenol-, Vinylester- oder Polyvinylharz.

10. Verfahren nach einem der Ansprüche 8 oder 9, **dadurch gekennzeichnet, dass** der Klebstoff (8) 40% bis 60% des Volumens des Flachmaterialbogens (4) nach der Tränkung ausmacht.

11. Verfahren nach einem der Ansprüche 9 oder 10, **dadurch gekennzeichnet, dass** das Harz mit Zusätzen angereichert wird, um den Klebstoff (8) zu bilden, wobei es sich bei diesen Zusätzen um Härte- und/oder Verdünnungsmittel zur Änderung der Viskosität des Klebstoffs handelt.

12. Verfahren nach einem der Ansprüche 8 bis 11, **dadurch gekennzeichnet, dass** es sich bei den Fasern der Flachmaterialbogen (4) um Glas-, Kohlenstoff-, Keramik- oder Aramidfasern oder um eine Mischung daraus handelt.

13. Verfahren nach einem der Ansprüche 8 bis 12, **dadurch gekennzeichnet, dass** das Verfahren einen Schritt zur Polymerisation der getränkten Flachmaterialbogen (4) umfasst, der darin besteht, die Flachmaterialbogen (4) zwischen zwei ebenen, parallelen Trägern anzuordnen, wobei diese Träger bei Umgebungstemperatur oder unter Wärmeeinfluss eine vorbestimmte Zeit lang gegeneinander gedrückt werden.

14. Verfahren nach einem der Ansprüche 8 bis 13 in Verbindung mit Anspruch 11, **dadurch gekennzeichnet, dass** der Klebstoff (8) zu über 50% aus einem Zusatz besteht.

15. Verfahren nach einem der Ansprüche 8 bis 13, **dadurch gekennzeichnet, dass** das Verfahren einen Schritt zur Vorpolymerisation umfasst, der darin besteht, die getränkten Flachmaterialbogen (4) eine vorbestimmte Zeit lang auf Umgebungstemperatur zu halten.

16. Verfahren nach Anspruch 15 in Verbindung mit Anspruch 11, **dadurch gekennzeichnet, dass** die Haftung der aneinander angrenzenden Flachmaterialbogen (4) des Walzerzeugnisses durch Erhöhung der Menge des Verdünnungsmittels im Verhältnis zur Menge des Harzes im Klebstoff (8) und/oder durch Erhöhung der Dauer des Vorpolymerisationsschritts verringert wird.

17. Verfahren nach einem der Ansprüche 8 bis 16, **dadurch gekennzeichnet, dass** der Vorgang zum Tränken der Fasergewebe (12) durch Zerstäuben, durch Aufbringen per Hand mittels einer Walze, durch Bedrucken auf einer Maschine vom Typ "Offset" oder durch Eintauchen erfolgt.

18. Anwendung eines Erzeugnisses nach einem der Ansprüche 1 bis 7 oder eines durch das Verfahren nach einem der Ansprüche 8 bis 17 gewonnenen Erzeugnisses zur Bildung einer abziehbaren Einstellscheibe für mechanische Konstruktionen.

## Claims

1. Laminated product with adjustable thickness through cleaving, this product comprising an alternate stack (2) of sheets (4) and layers (6) of adhesive material (8), each sheet 4 being intrinsically resistant to tearing, and each layer (6) of adhesive material (8) connecting the one to the other two adjacent sheets (4) of the stack (2) by a connection force that is weaker than the resistance of the sheets (4) to tearing, whereby each sheet (4) can be detached from the stack (2) without being torn, **characterized in that** each sheet (4) is formed of woven fibres and **in that** each sheet (4) of each pair of sheets (4) adjacent to one same common layer (6) of adhesive material (8) is impregnated by a mass of adhesive material (8) which sets in the common layer (6) of adhesive material (8).

2. Laminated product in accordance with claim 1, **characterized in that** the adhesive material (8) is a resin, of the epoxy, phenolic, vinyl ester or polyvinyl type for example, joining the sheets (4) by polymerization.

3. Laminated product in accordance with claim 2, **characterized in that** the adhesive material (8) represents 40 to 60% of the volume of the product before polymerization.

4. Laminated product in accordance with either claim 2 or claim 3, **characterized in that** the additives are added to the resin to form the adhesive material (8), these additives being hardeners and/or diluents for modifying the viscosity of the adhesive material.

5. Laminated product in accordance with claim 4, **characterized in that** adhesion of the sheets (4) adjacent to one another is reduced by increasing the quantity of diluent in proportion to the quantity of adhesive material (8) in the resin.

6. Laminating product in accordance with claims 4 or 5, **characterized in that** the additive represents more than 50% of the volume of the adhesive material (8) before polymerization.

7. Laminated product in accordance with any one of claims 1 to 6, **characterized in that** the fibres of the sheets (4) are glass, carbon, ceramic or aramid fibres, or a combination of these.

8. Process for manufacturing a laminated product having a thickness that can be varied by cleaving, this process comprising a stacking process for forming an alternate stack of sheets (4) and layers (6) of an adhesive material (8), **characterized in that**, prior to the stacking operation, it comprises choosing a fabric (12) of woven fibres as a sheet (4) and of impregnating each sheet (4) with an adhesive material (8), each layer (6) of adhesive material (8) disposed between two adjacent sheets (4) being formed by the joining of the adhesive material (8) impregnated into one of the adjacent sheets (4) with the adhesive material (8) impregnated in the adjacent sheet (4).

9. Process in accordance with claim 8, **characterized in that** the adhesive material (8) is a resin of the epoxy, phenolic, vinyl ester or polyvinyl type for example.

10. Process in accordance with claim 8 or 9, **characterized in that** the adhesive material represents 40 - 60% of the volume of the sheet (4) after impregnation.

11. Process in accordance with claim 9 or 10, **characterized in that** the additives are added to the resin to form the adhesive material (8), these additives being hardeners and/or diluents for modifying the viscosity of the adhesive material (8).

12. Process in accordance with any one of claims 8 to 11, **characterized in that** the fibres of the sheets (4) are glass, carbon, ceramic or aramid fibres, or a combination of these.

13. Process in accordance with any one of claims 8 to 12, **characterized in that** this process comprises a stage in which the impregnated sheets (4) are polymerized by placing the sheets (4) between two flat, parallel supports, these supports being pressed one against the other at ambient or increased temperature and for a set period of time.

14. Process in accordance with any one of claims 8 to 13 combined with claim 11, **characterized in that** the adhesive material (8) comprises more than 50% additive.

15. Process in accordance with any one of claims 8 to 13, **characterized in that** the process comprises a pre-polymerization stage consisting of keeping the impregnated sheets (4) at ambient temperature for a set period of time.

16. Process in accordance with claim 15 in combination with claim 11, **characterized in that** the adhesion of the sheets (4), of the laminated product, that are adjacent to each other, is decreased by increasing the quantity of diluent in proportion to the quantity of resin in the adhesive material (8) and/or by increasing the duration of the pre-polymerization stage.

17. Process in accordance with any one of claim 8 to 16, **characterized in that** the impregnation of the fibre fabrics (12) is carried out by spraying, through manual application using a roller, through printing on an offset-type machine or by soaking.

18. Application of a product in accordance with any one of claims 1 to 7, or of a product obtained by the process in accordance with any one of claims 8 to 17, into the composition of an adjusting wedge for mechanical assemblies.
